# EUROPEAN PATENT APPLICATION

(11) **EP 1 262 132 A1**
(43) Date of publication of application: **04.12.2002**
(21) Application number: 01830343.8
(22) Date of filing: 28.05.2001
(51) Int. Cl.: A47J 43/24

(54) **Centrifugal salade-drainer and colander**

(71) Applicant: Pedulla', Christian Pio, 20124 Milano (IT); Pagliacci, Gianfilippo, 20145 Milano (IT)
(72) Inventor: Pedulla', Christian Pio, 20124 Milano (IT); Pagliacci, Gianfilippo, 20145 Milano (IT)
(74) Representative: Faggioni, Marco, Dr. Ing.

(57) **Abstract**

Centrifugal salad-drainer and colander, of the type in which a perforated basket (1) is caused to fast spin about its axis by means of a star lever (5), the ends (6) of which engage into corresponding notches of an upper peripheral crown of the basket (1). The basket (1) is steadily pivoted, at the centre of its base, onto a support (8) provided with a rest base (9) having transversal dimensions smaller than the overall dimensions of the salad-drainer. Said star lever (5) is pivoted into a cap (2) which comprises means (3, 4) to cause the rotation of said lever (5) and which extends up to covering the top part and at least a portion of the sidewall of said basket (1).

For use as a colander, the basket (1) preferably comprises perforations of small size - apt to retain pasta or rice - in correspondence of its base and of a lower portion of its sidewalls, and of larger size in correspondence of an upper portion of its sidewalls.

## Description

The present invention concerns a manual centrifugal device to drain salad and other vegetables, to be eaten raw after having been washed, or also to drain pasta, rice or vegetables after they have been cooked, of course without using the centrifugal device.

Devices such as salad-drainers have been on the market since many years and are widely spread due to their functional capacity, efficiency and easy use. They normally consist of a cylindrical or frustoconical container, provided with a cover, and of an inner perforated basket into which is introduced the salad to be drained.

A rotating disk, provided with a handle for the user to perform the required operation, is housed into the outer part of the cover. Said rotating disk is mechanically connected, by way of an overgear, to a star lever having three or more arms and being hinged in an idle position into the inner central part of the cover. The ends of the lever arms - which are either free or connected together by an outer ring - are provided with teeth for the fast engagement thereof with a peripheral crown of the inner basket, so that when the user starts to rotate the outer disk by acting on the handle, the inner basket is driven into a fast rotary movement which causes the water into which the vegetables have been washed to spout against the inner walls of the container and finally collect onto the bottom thereof. There are known to be also other types of mechanical devices to cause the spinning of the salad-drainer basket, but their overall functional capacity is the same as that described heretofore.

Although the huge mass production of this device has allowed to considerably reduce its production costs, these are still quite high due to the large amount of plastic material - a special high-quality material, suited for contact with foods - required to produce the different parts of said device.

A first object of the present invention is thus to reduce the production costs of a centrifugal salad-drainer, particularly by considerably reducing the amount of plastic material required for the production thereof.

A second drawback of the known devices lies moreover in the wide overall dimensions of the different component parts thereof, especially when disassembled. The problem of space is in fact particularly felt in the kitchens of present city dwellings, in which it is not sufficiently easy and practical to use a device which, after the salad has been washed and drained, takes up - when turned upside down on the draining rack - the space of at least two components of large dimensions, namely the container with its basket placed inside, and the cover; in fact, at least in most cases, said cover cannot be steadily piled up over the bottom of the overturned container.

Another object of the present invention is thus to supply a centrifugal salad-drainer which takes up less space, both during use thereof and when being placed to dry on the draining rack, after use.

A further drawback of the known type salad-drainers lies in the fact that, in order to obtain a proper draining of the salad, especially when highly soaked, it is necessary to carry out two separate centrifugations, interrupted by emptying the outer container. In fact, at the end of the first centrifugation, the considerable amount of water left by the salad collects onto the bottom of the container and is thus sufficient to keep wet the portion of salad lying at the bottom of the basket, thereby making it necessary to carry out a second centrifugation after having previously emptied the container from the water collected therein after the first operation.

A third object of the present invention is thus to supply a centrifugal salad-drainer which allows to fully eliminate the above drawback, namely to obtain a perfect draining of the salad - independently from the amount of water contained therein - at the end of a single centrifugation.

Moreover, common experience teaches how long and toilsome is the operation to wash the salad before draining the same. In fact, the salad is normally placed in the outer container of the salad-drainer, filled with water after removal of the basket, and is washed several times by changing the water each time. Alternatively, the basket containing the salad is left under running water; in this case the washing is simpler but not equally efficient, seen that any earth or other heavy residues cannot be expelled from the container, while part of the salad keeps afloat and uncontrollably pours out from its edges together with the running water.

A fourth object of the present invention is thus to supply a salad-drainer which also allows to easily and quickly carry out the washing operation, without having to perform repeated water pourings and fillings in and out of the container, and without the drawback of scattering into the sink the smaller and lighter salad leaves which float in the washing water.

It is finally well known the so-called colander which allows to separate foods cooked in water from the cooking water. It is a container of roundish shape, made of plastic material or metal, having a perforated surface and equipped with rest feet.

A fifth object of the present invention is to supply a salad-drainer which may also act as a colander, thereby eliminating the need to dispose of this second fundamental kitchen tool and thus reducing even further the space requirements compared to those existing at present.

According to the present invention, these and other objects are fully reached by means of a centrifugal salad draining and colander - of the type in which a perforated basket is caused to fast spin about its axis by means of a star lever, the ends of which engage into corresponding notches of an upper peripheral crown of the basket - characterized in that said basket is steadily pivoted, at the center of its base, onto a support provided with a rest base, and in that said star lever is pivoted into a cap which comprises means to cause the rotation of said lever.

According to a characteristic of the invention, the transversal dimensions of said support are smaller than the overall dimensions of the salad-drainer.

According to another characteristic of the invention, said cap extends up to covering the top part and at least a portion of the sidewall of said basket.

According to a further characteristic of the invention, said basket pivoting is obtained by cooperation of a lump, centrally projecting from the base of the basket and formed as a rotation solid, with a conjugate cup surface provided in said support.

According to a particular embodiment, suited also for use as a colander, said basket has a semi-spherical, parabolic or elliptical shape, and its perforations are of small size - apt to retain pasta or rice - in correspondence of the base and of a lower portion of its sidewalls, and of larger size in correspondence of an upper portion of its sidewalls.

Further characteristics and advantages of the salad-drainer according to the present invention will anyhow be more evident from the following detailed description of some preferred embodiments thereof illustrated by way of example on the accompanying drawings, in which:
Fig. 1 is a diagrammatic, partly sectioned, front view of a first embodiment of the salad-drainer according to the present invention;
Fig. 2 is a plan view of the salad-drainer illustrated in fig. 1;
Fig. 3 is a diagrammatic, partly sectioned, front view showing a variant of the salad-drainer illustrated in fig. 1;
Fig. 4 is a plan view of the salad-drainer illustrated in fig. 3;
Fig. 5 is a diagrammatic, partly sectioned, front view of a second embodiment of the salad-drainer according to the present invention; and
Fig. 6 is a diagrammatic, partly sectioned, front view showing a variant of the salad-drainer illustrated in fig. 5.

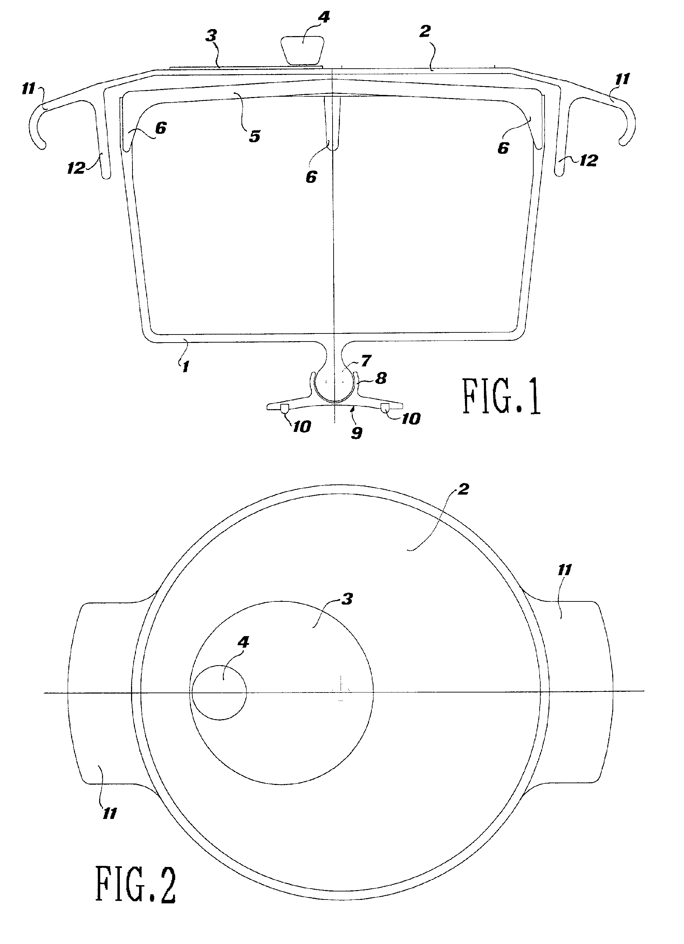

As illustrated in figs. 1 and 2, the first embodiment of the salad-drainer according to the present invention consists of a perforated basket 1 and of a cap 2 comprising means, known per se, to cause the spinning of the basket 1. In this embodiment, said means consist of a rotating disk 3 housed into the cap 2 and provided with a control handle 4; through an appropriate overgear (not shown) the disk 3 transmits the rotary motion to a multi-armed star lever 5 (three arms in the drawings) pivoted into the cap 2 in an inner central position. The toothed ends 6 of the arms of the lever 5 fit into corresponding notches formed on the peripheral crown of the basket 1, so as to transmit to said basket the wanted spinning motion. The means to cause the rotation of the basket, as described hereabove, are by no means limiting for the salad-drainer/colander according to the present invention, but merely form an example; in fact, any of the known means provided for this purpose can be easily adopted.

A lump 7, having the configuration of a rotation solid - for example, the shape of a spherical bead illustrated on the drawings - projects from the bottom central portion of the base of the basket 1, and is preferably formed in one piece therewith. The lump 7 is housed freely rotatable, into a support 8 having for this purpose a cup surface, conjugate with the outer surface of the lump 7. Preferably, the walls of said cup surface surround the lump 7 to an extent such as to allow said lump to be elastically inserted, by snapping, into the support 8 and be held therein, so that said support remains steadily connected to the basket 1 during any movement of the salad-drainer. On its bottom part the support 8 has a rest base 9, sufficiently wide to ensure a good steadiness to the basket 1, but not to the extent of exceeding the lateral dimensions of the salad-drainer, said base 9 being preferably provided with an anti-slipping gasket 10.

The cap 2 is provided with lateral handgrips 11 and it extends downwards with an annular band 12 which covers the top part of the sidewalls of the basket 1. Said basket is shaped as a rotation solid having, at will, a cylindrical, frustoconical, hemispherical, parabolic or elliptical shape. These last three shapes - in which the sidewalls of the basket 1 are smoothly, and not sharply, radiused to its base - are more appropriate when using the salad-drainer also as a colander.

In use, the washed salad is introduced into the basket 1 of the salad-drainer according to the present invention while said basket bears with its support 8 onto the bottom of a sink. To facilitate a steady and practically horizontal positioning of the basket 1, also when the latter is without its cap 2, the support 8 can comprise rest bars allowing to hold up the base of the basket as soon as it exceeds a predetermined inclination. The cap 2 is then positioned onto the basket 1 and the user starts to cause the spinning of said basket by acting with one hand onto the handle 4 while, with the other hand, he grasps one of the handgrips 11 to keep the cap 2 and the basket 1 in a steady position during the centrifugation.

The washing water is thus easily and entirely expelled from the basket 1, during the centrifugation, and drops directly into the sink moving away from the device. The annular band 12 of the cap 2 prevents splashes of water from spouting out of the sink and the whole draining operation can easily be checked visually, so as to make it longer or shorter, up to reaching the wanted level of salad draining.

As it appears evident from the above description, the salad-drainer according to the present invention has fully reached the first three intended objects. In fact, the amount of plastic material used for its production has been drastically reduced, thanks to the full elimination of the outer container. This has also allowed to reduce the space of the salad-drainer when being placed to dry; in fact, since there are no closed portions, there is no need to put the device upside down on the draining rack, but it can be dried up in the same position of its use, namely with the cap 2 positioned on the basket 1. The space taken up is thus limited to a single element of large dimensions, instead of two elements as it happens with the known type salad-drainers. The salad draining operation moreover takes place with no water stagnation, seen that there is no longer an outer container collecting the water, whereby said operation can be carried out to the wanted level with a single centrifugation.

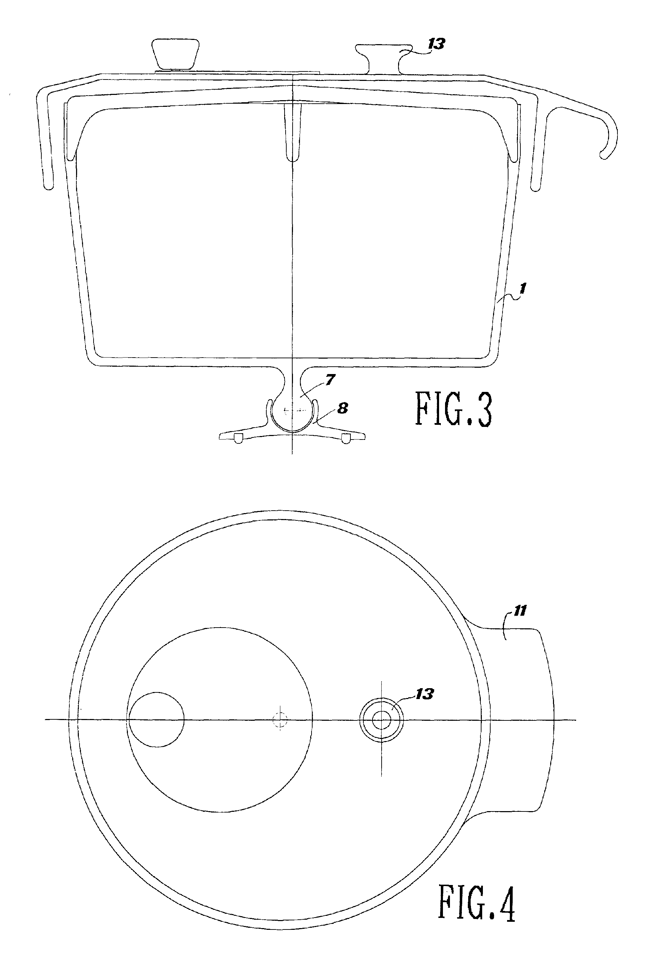

Figs. 3 and 4 illustrate a variant of the embodiment described hereabove, which allows to efficiently reach also the fourth object of the present invention, namely a faster and easier salad washing operation.

In fact, in this embodiment, a mouthpiece 13 is positioned on the top of the cap 2 to let the washing water into the basket 1. In use, the salad-drainer is placed with said mouthpiece 13 under the water tap turned on, while simultaneously spinning the basket 1; this allows to carry out an accurate and full washing of the salad, with no need to remove it from the basket and without creating the problem of the waste of salad leaves floating inside the sink, since the salad is always firmly held into the perforated basket 1. On the contrary, earth and other small particles of dirt are drawn out of the basket 1 by the water flow and by the centrifugation action and are scattered directly into the sink.

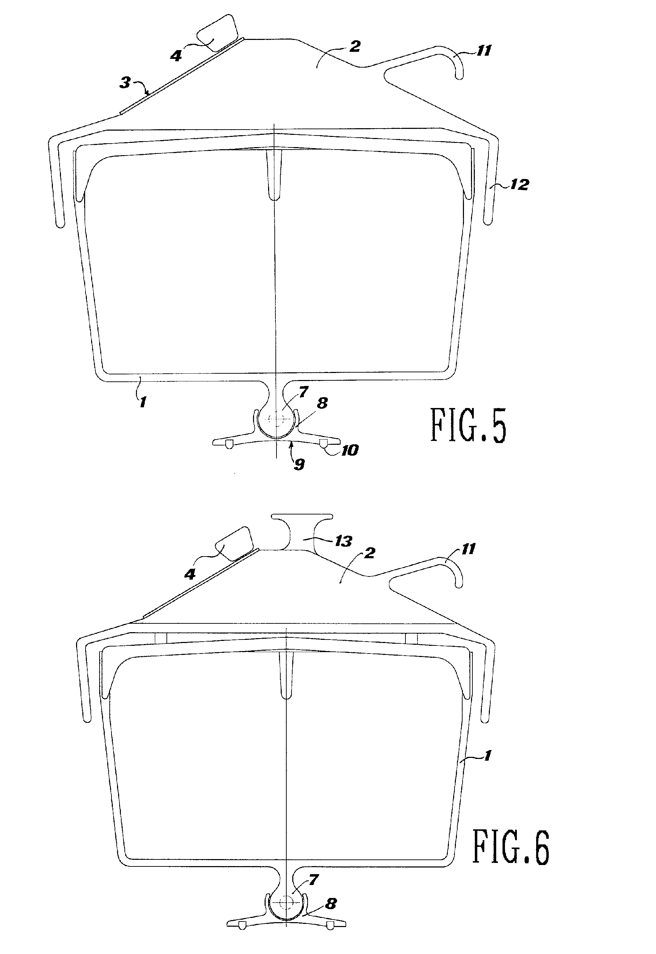

Of course, also the shape of the cap 2 and of the respective components - as the rotating disk, the handgrips and the mouthpiece - can be varied at will, without thereby departing from the scope of the present invention. By way of example, a second possible embodiment of the salad-drainer according to the invention - without and, respectively, with the mouthpiece 13 - is illustrated in figs. 5 and 6; in this embodiment, the cap 2 has a configuration differing from that illustrated in the previous figures.

The special configuration of the salad-drainer according to the present invention - and particularly of the basket 1 coupled with the support 8 - allows to use the same, without the cap 2, also as a colander, through simple structural expedients. It is in fact sufficient:
- to provide, as already said, for a configuration of the support 8 apt to limit the extent of any possible lateral oscillation of the basket 1, by equipping the latter with lateral rest feet;
- to provide for the perforations of the basket 1 to be of small size in the bottom part of the basket and of larger size in the top part, so that the drained vegetables, pasta or rice, are retained therein; while, when used as a salad-drainer, any excess of water is anyhow apt to rapidly drop out of the basket after having gone up its walls through centrifugal force, which walls will have to be preferably also slightly inclined upwards and outwardly for the purpose;
- to equip the upper peripheral crown of the basket with a slightly projecting rim, or with two opposite ears, so as to allow handling the same after the pasta draining operation.

The salad-drainer according to the invention has thus fully reached also its fifth and last object.

The centrifugal salad-drainer and colander of the present invention has been described with reference to some specific embodiments thereof, diagrammatically illustrated on the accompanying drawings, but it is evident that the scope of the invention is not limited to said embodiments but extends to any possible variants within reach of a person skilled in the art, provided that they fall within the definitions given in the following claims.

## Claims

1. Centrifugal salad-drainer and colander - of the type in which a perforated basket (1) is caused to fast spin about its axis by means of a star lever (5), the ends (6) of which engage into corresponding notches of an upper peripheral crown of the basket (1) - **characterized in that** said basket is steadily pivoted, at the center of its base, onto a support (8) provided with a rest base (9), and **in that** said star lever (5) is pivoted into a cap (2) which comprises means (3, 4) to cause the rotation of said lever (5).

2. Centrifugal salad-drainer and colander as in claim 1), wherein the transversal dimensions of said support (8) are smaller than the overall dimensions of the salad-drainer.

3. Centrifugal salad-drainer and colander as in claim 1), wherein said cap (2) extends up to covering the top part and at least a portion of the sidewall of said basket (1).

4. Centrifugal salad-drainer and colander as in claim 1), wherein said pivoting is obtained by cooperation of a lump (7), centrally projecting from the base of the basket (1) and formed as a rotation solid, with a conjugate cup surface provided in said support (8).

5. Centrifugal salad-drainer and colander as in claim 4), wherein said lump (7) is formed in one piece with the basket (1).

6. Centrifugal salad-drainer and colander as in claim 4), wherein said lump (7) is elastically inserted by snapping into said support (8).

7. Centrifugal salad-drainer and colander as in claim 4), wherein said lump (7) is shaped as a spherical bead.

8. Centrifugal salad-drainer and colander as in claim 1), wherein said rest base (9) is provided with an anti-slipping gasket (10).

9. Centrifugal salad-drainer and colander as in claim 1), wherein said support (8) comprises bearing bars projecting from said basket (1) to allow limiting any possible lateral inclination thereof.

10. Centrifugal salad-drainer and colander as in claim 1), wherein said cap (2) is provided with at least one handgrip (11).

11. Centrifugal salad-drainer and colander as in claim 1), wherein said cap (2) is equipped with a mouthpiece (13) to let the washing water into the basket (1).

12. Centrifugal salad-drainer and colander as in claim 1), wherein said basket (1) is shaped as a rotation solid having a cylindrical, frustoconical, hemispherical, parabolic or elliptical shape.

13. Centrifugal salad-drainer and colander as in any one of the previous claims, wherein the perforations of said basket (1) are of small size - apt to retain pasta or rice - in correspondence of its base and of a lower portion of its sidewalls, and of larger size in correspondence of an upper portion of its sidewalls.

14. Centrifugal salad-drainer and colander as in claim 13), wherein said basket (1) has lateral rest feet.

15. Centrifugal salad-drainer and colander as in claim 13), wherein the sidewalls of said basket (1) are inclined upwards and outwardly.

16. Centrifugal salad-drainer and colander as in claim 13), wherein the upper peripheral crown of said basket (1) has a slightly projecting rim, or two opposite ears.
